# EUROPÄISCHE PATENTANMELDUNG

(11) **EP 1 067 067 A1**
(43) Veröffentlichungstag der Anmeldung: **10.01.2001**
(21) Anmeldenummer: 00112360.3
(22) Anmeldetag: 09.06.2000
(51) Int. Cl.: B65G 47/252, B65G 47/24

(54) **Vorrichtung zum Wenden von zu Paketen gestapelten flachliegenden Gegenständen**

(30) Priorität: 06.07.1999 DE 19931145
(71) Anmelder: Windmöller & Hölscher, D-49525 Lengerich (DE)
(72) Erfinder: Staat, Andreas, 49080 Osnabrück (DE); Schrödter, Andreas, 49549 Ladbergen (DE); Thies, Jörg-Christian, 49201 Dissen (DE)

(57) **Zusammenfassung**

Die Erfindung betrifft eine Vorrichtung zum Wenden von zu Paketen gestapelten flachliegenden Gegenständen, insbesondere Säcken. Erfindungsgemäß weist die Vorrichtung in einem Gestell mindestens ein am Gestell angeordnetes Führungsförderband und mindestens ein am Gestell angeordnetes Abführungsförderband auf. Zwischen diesen ist im Gestell ein um mindestens 180° schwenkbares Haltemittel zum Aufnehmen, Wenden und Abgeben der Pakete angeordnet.

## Beschreibung

Die Erfindung betrifft eine Vorrichtung zum Wenden von zu Paketen gestapelten flachliegenden Gegenständen, insbesondere Säcken.

Beim Handling von gestapelten flachliegenden Gegenständen, beispielsweise Säcken ken, ist es im laufe des Verarbeitungsprozesses manchmal notwendig, diese Pakete zu wenden. Dies kann beispielsweise dann der Fall sein, wenn die Anlegeenden der im Stapelpaket abgelegten Säcke zu vertauschen sind, beispielsweise wenn die Stapel aus Ventilsäcken bestehen, bei denen die Ventile ja nur an einer Seite vorgesehen sind.

Aufgabe der Erfindung ist es, eine Vorrichtung an die Hand zu geben, mit der die zu Paketen gestapelten flachliegenden Gegenstände automatisch gewendet werden können.

Erfindungsgemäße wird diese Aufgabe durch eine Vorrichtung mit den Merkmalen des Anspruchs 1 gelöst. Eine derartige Vorrichtung weist in einem Gestell mindestens eine Zuführungseinrichtung und mindestens eine Abführungs- und Weiterverarbeitungseinrichtung auf. Zwischen dieser Zuführungseinrichtung und der Abführungseinrichtung ist ein um mindestens 180° schwenkbares Haltemittel zum Aufnehmen, Wenden und Abgeben der Pakete angeordnet. Die Zuführungs- und Abführungseinrichtungen (z.B. Bänder) dienen dazu, die einzelnen Pakete entweder von Speichern zu übernehmen oder in Speichern abzulegen oder dazu, aus Speichern übernommene Pakete zu Rotationsanlegern zu fördern, wobei die Pakete aufgabengemäß zwischendurch gewendet werden müssen. Dazu werden die Pakete erfindungsgemäß vom Zuführungsförderband dem schwenkbaren Haltemittel zugefördert, von diesem aufgenommen, gewendet und an das Abführungsförderband abgegeben, das die Pakete dann an einen Speicher, Rotationsanleger oder eine andere Einrichtung wieder abgibt.

Vorteilhafte Ausgestaltungen der Erfindung ergeben sich aus den sich an den Hauptanspruch anschließenden Unteransprüchen.

Demnach kann das schwenkbare Haltemittel höhenverstellbar im Gestell angeordnet sein. Es können auch mehrere übereinander angeordnete Zuführungsförderbänder und/oder Abführungsförderbänder im Gestell angeordnet sein. Aufgrund dieser Ausgestaltung kann ein Paket in einer bestimmten Höhe von einem der Zuführungsförderbänder übernommen werden, vom schwenkbaren Haltemittel aufgenommen werden, in der Höhe im Gestell verfahren werden und an ein höher oder niedriger liegendes Abführungsförderband je nach Bedarf abgegeben werden.

Vorteilhaft kann das schwenkbare Haltemittel aus zwei seitlichen Schwenkplatten bestehen, die um eine Achse rotierbar in ihnen zugeordneten Traversen gelagert sind. Entlang der Schwenkplatten sind auf entsprechenden Führungsschienen zwei parallele Träger so zueinander zustellbar gelagert, daß sie das Paket klemmend aufnehmen können.

Das Klemmen zwischen den Trägern kann beispielsweise über feste Klemmplatten, die an den parallelen Trägern vorgesehen sind, erfolgen, wobei sich die Oberflächen der Klemmplatten jeweils an der jeweiligen sich gegenüberliegenden Oberfläche des Paketes anlegen und so das Paket einklemmen, so daß es während des Wendens sicher zwischen den beiden Klemmplatten gehalten wird.

Eine andere vorteilhafte Ausführungsform besteht darin, daß die parallelen Träger an ihren Enden jeweils Umlenkrollen tragen, um die Förderbänder geführt sind. Mittels dieser Förderbänder ist gewährleistet, daß die von dem Zuführungsförderband angelieferten Pakete automatisch übernommen werden können und gleichzeitig automatisch wieder an die Abführungsförderbänder abgegeben werden können. Zum Antrieb der Förderbänder können in jeweils einer der Umlenkrollen ein sog. Trommelmotor angeordnet sein.

Gemäß einer vorteilhaften Ausführungsform ist zumindest an einer der Traversen ein Motor angeordnet, der die Schwenkachse der Schwenkplatte in gezielte Rotationsbewegung versetzen kann. Dabei kann der Motor unmittelbar an der Achse angeflanscht sein, aber auch in üblicher Weise über ein Getriebe mit der Schwenkachse in Wirkverbindung stehen.

Die beiden Träger können mittels einer diese miteinander verbindenden Kolbenzylinderanordnung aufeinander zustellbar bzw. voneinander entfembar sein, um das jeweilige aufzunehmende Paket einzu klemmen bzw. wieder freizugeben.

Die Traversen können vorteilhaft an beiden Enden in einer Buchse enden, von denen zumindest eine Buchse eine Gewindebuchse darstellt, die eine am Gestell gelagerte und motorisch antreibbare Gewindestange umgreift. Hierdurch kann die Traverse mit den an ihr drehbar gelagerten schwenkbaren Haltemittel in ihrer Höhe entlang des Gestells verstellt werden.

Weitere Einzelheiten und Vorteile der Erfindung werden anhand von in der Zeichnung dargestellten Ausführungsbeispielen näher erläutert. Es zeigen:
- Fig. 1:: eine Seitenansicht einer ersten Ausführungsform der erfindungsgemäßen Wendevorrichtung,
- Fig. 2:: ein Detail der Ausführungsform gemäß Fig. 1 in Seitenansicht,
- Fig. 3:: eine Draufsicht auf ein Teil der Wendevorrichtung gemäß Fig. 1 und
- Fig. 4:: eine Seitenansicht eines Details einer abgewandelten Ausführungsform der erfindungsgemäßen Wendevorrichtung.

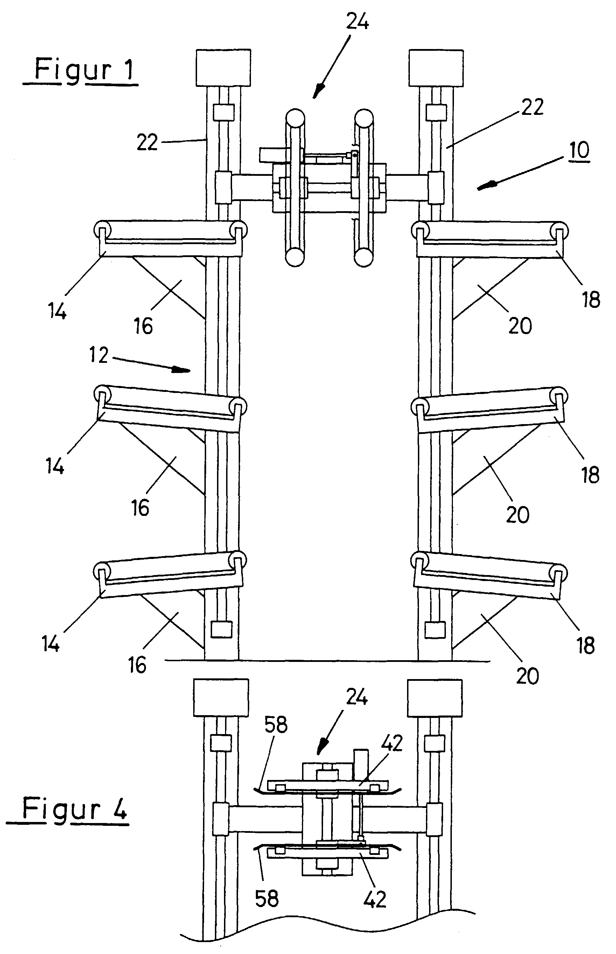

In Fig. 1 ist eine Vorrichtung 10 zum Wenden von zu Paketen gestapelten Säcken dargestellt. Hier sind in einem Gestell 12 auf einer Seite übereinander drei Zuführungsförderbänder 14 übereinander angeordnet. Dabei können diese um einen seitlich auskragenden Träger 16 kippbar gelagert sein. Auf der gegenüberliegenden Seite des Gestells 12 sind drei Abführungsförderbänder 18 übereinander angeordnet, die jeweils schwenkbar um seitlich herausragende Träger 20 gelagert sind.

Das Gestell 12 besteht im wesentlichen aus vier vertikalen Ständern 22, die die zuvor beschriebenen und im folgenden noch zu beschreibenden Teile aufnehmen. Zwischen den Ständern 22 des Gestells 12 und somit zwischen den Zuführungsförderbändern 14 und Abführungsförderbändern 18 ist ein schwenkbares Klemmittel 24 entlang der Höhe des Gestells höhenverstellbar angeordnet.

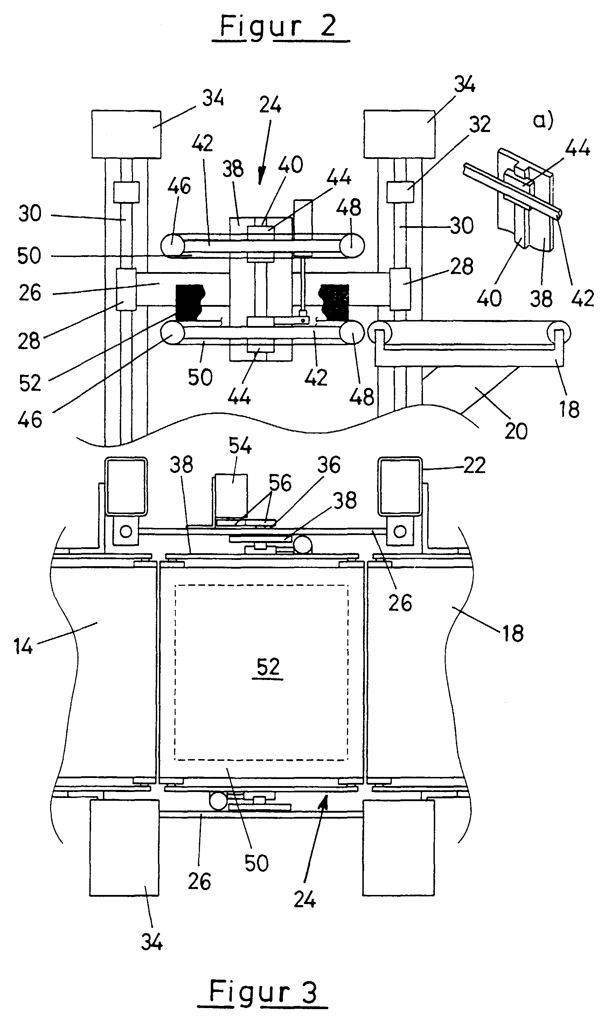

Der Aufbau des schwenkbaren Klemmittels 24 ergibt sich insbesondere aus der Darstellung gemäß der Figuren 2 und 3. Das schwenkbare Haltemittel 24 weist zwei seitliche Traversen 26 auf. Die Traversen 26 enden jeweils in Muffen 28. Zwei der Muffen 28 und mindestens eine Traverse 26 weisen ein Innengewinde auf, das mit entsprechenden Gewindestangen 30 kämmt. Die Gewindestangen 30 sind über ständerfeste Konsolen 32 an den Ständern 22 befestigt und laufen über die Höhe der Ständer 22 des Gestells 12. An einem Ende werden die Gewindestangen 30 über einen Motor 34 in Rotationsbewegung versetzt. Durch diesen Mechanismus kann das schwenkbare Haltemittel 24 über die Höhe des Gestells verfahren werden. Grundsätzlich können sämtliche Muffen 28 als Gewindemuffen ausgebildet sein. Es reicht allerdings auch aus, wenn nur ein Teil der Muffen 28 als Gewindemuffen ausgebildet sind. In diesem Fall gleiten die anderen Muffen entlang einer glatten Führungsstange, die an die Stelle der Gewindestange tritt. In den Traversen 26 sind um eine Achse 36 jeweils Schwenkplatten 38 gelagert. Die Schwenkplatten 38 weisen jeweils über ihre Länge verlaufende Führungsschienen 40 auf, entlang der Träger 42 über ein jeweiliges Gleitstück 44 verschiebbar sind. Dies ist perspektivisch in der Fig. 2a dargestellt. Zwischen den jeweiligen Trägern 42 d sind jeweils an den Enden Umlenkrollen 46 und 48 drehbar gelagert. Über diese Umlenkrollen sind Förderbänder 50 geführt. Auf dem unteren Förderband 50 kann ein Paket von aufeinander gestapelten Säcken 52 entsprechend der Darstellung gemäß Fig. 2 bzw. der Fig. 3 abgelegt werden. Die Förderbänder 50 sind motorisch antreibbar, wobei hier in den Umlenkrollen 46 jeweils ein antreibender Trommelmotor (hier nicht näher dargestellt) angeordnet ist. Hierdurch können die Förderbänder zur Aufnahme und Abgabe des Pakets 52 angetrieben werden. Die Träger 42 bzw. die Gleitstücke 44 sind über eine Pneumatik-Kolbenzylindereinheit miteinander verbunden. Durch entsprechende Betätigung der Kolbenzylindereinheit können daher die entsprechenden Träger entlang der Führungsschiene einer Schwenkplatte aufeinander zubewegt bzw. voneinander entfernt werden. Hierdurch können die Pakete 52 zwischen den jeweiligen Oberflächen der Förderbänder 50 eingeklemmt werden. Durch entsprechendes Auseinanderfahren der Träger 42 kann das zuvor eingeklemmte Paket 52 wieder freigegeben werden.

Wie in Fig. 3 dargestellt ist an einer der beiden Traversen 26 ein Motor 54 angeordnet, der über entsprechende Zahnräder 56 die Achse 36 und mit dieser die Schwenkplatte 38 in gezielte Rotationsbewegung versetzen kann. Im hier dargestellten Ausführungsbeispiel kann das schwenkbare Haltemittel 24 um 360° verschwenkt werden. Für die Funktionalität der Wendevorrichtung reicht es allerdings aus, wenn eine Schwenkmöglichkeit um 180° vorgesehen ist.

In Fig. 4 ist eine abgewandelte Ausführungsform der Erfindung dargestellt. Hier sind an den Trägern 42 jeweils ebene Klemmplatten 58 vorgesehen zwischen die die in der Fig. 4 nicht näher dargestellten Pakete 52 einklemmbar sind. Entgegen der zuvor beschriebenen Ausführungsform müssen hier die Pakete mit fremder Hilfe, beispielsweise entsprechend dafür vorgesehen Schiebern etc., eingeschoben und herausgenommen werden.

## Patentansprüche

1. Vorrichtung zum Wenden von zu Paketen gestapelten flachliegenden Gegenständen, insbesondere Säcken, mit einem Gestell, mit mindestens einer dem Gestell zugeordneten Zuführungseinrichtung und mindestens einer zugeordneten Abführungs- oder Weiterverarbeitungsvorrichtung und mit einem zwischen diesen im Gestell um mindestens 180° schwenkbaren Haltemittel zum Aufnehmen, Wenden und Abgeben der Pakete.

2. Vorrichtung nach Anspruch 1, dadurch gekennzeichnet, daß das schwenkbare Haltemittel höhenverstellbar im Gestell angeordnet ist.

3. Vorrichtung nach Anspruch 1 oder 2, dadurch gekennzeichnet, daß mehrere übereinander angeordnete Zuführungsfärderbänder und/oder Abführungsförderbänder im Gestell angeordnet sind.

4. Vorrichtung nach einem der Ansprüche 1 bis 3, dadurch gekennzeichnet, daß das schwenkbare Haltemittel aus zwei seitlichen Schwenkplatten besteht, die die um eine Achse rotierbar in ihnen zugeordneten Traversen gelagert sind und daß entlang der Schwenkplatten auf entsprechenden Führungsschienen zwei parallele Träger so zueinander zustellbar sind, daß sie das Paket klemmend aufnehmen können.

5. Vorrichtung nach einem der Ansprüche 1 bis 4, dadurch gekennzeichnet, daß an den parallelen Trägern jeweils feste Klemmplatten zur Anlage an der jeweiligen sich gegenüberliegenden Oberfläche des Paketes angeordnet sind.

6. Vorrichtung nach einem der Ansprüche 1 bis 4, dadurch gekennzeichnet, daß die parallelen Träger an ihren Enden jeweils Umlenkrollen tragen, um die Förderbänder geführt sind.

7. Vorrichtung nach Anspruch 6, dadurch gekennzeichnet, daß bei jedem parallelen Träger in einer der Umlenkrollen ein Trommelmotor zum Antrieb des entsprechenden Förderbandes angeordnet ist.

8. Vorrichtung nach einem der Ansprüche 4 bis 7, dadurch gekennzeichnet, daß an zumindest einer der Traversen ein Motor angeordnet ist, der die Schwenkachse der Schwenkplatte in gezielte Rotationsbewegung versetzen kann.

9. Vorrichtung nach einem der Ansprüche 4 bis 8, dadurch gekennzeichnet, daß beide Träger mittels einer diese miteinander verbindenden Kolben-Zylinderanordnung aufeinander zustellbar sind.

10. Vorrichtung nach einem der Ansprüche 1 bis 9, dadurch gekennzeichnet, daß die Traverse an beiden Enden in einer Buchse endet, von denen zumindest eine Buchse eine Gewindebuchse darstellt die eine am Gestell gelagerte und motorisch antreibbare Gewindestange umgreift.
